# EUROPEAN PATENT APPLICATION

(11) **EP 1 465 093 A1**
(43) Date of publication of application: **06.10.2004**
(21) Application number: 03007822.4
(22) Date of filing: 04.04.2003
(51) Int. Cl.: G06F 17/60, G06F 17/30

(54) **Method and system of media management**

(71) Applicant: Culture.com Technology (Macau) Ltd, Macau (CN)
(72) Inventor: Shen, Te-Chang, C.C., 6 & (I-L), Macau (CN)
(74) Representative: Manitz, Finsterwald & Partner GbR

(57) **Abstract**

A method and a system of media management are provided, allowing a user at a computer device to be connected to the media management system via Internet and browse media contents. Upon receiving a browsing request from the user, the media management system searches a media menu having a plurality of media classified by common and different stories corresponding to the request, and sends the media menu to the computer device for the user to select. According to a media name and story classification selected by the user, the system searches a corresponding media story file from a media database and sends the file to the computer device to allow the user to browse the file. The system waits for the user who browses the file to send back a review result and computes the level of acceptance for the media and stories thereof according to the review result.

## Description

### FIELD OF THE INVENTION

The present invention relates to methods and systems of media management, and more particularly, to a method and a system of media management to provide media with different stories according to users' requirements and to easily and quickly compute the level of acceptance for the media.

### BACKGROUND OF THE INVENTION

With the development of the personal computer (PC) and the web technology, one can easily obtain the information from Internet that provides real time exchange of the information and abundance of resource. Booksellers, for instance have once tried to record information of the book on a floppy disc or compact disc (CD) to improve the shortcomings of the paper book, so that the readers can read through use of the PC. At the present day, since Internet is getting more and more popular, information of different books is located to a website, from which the reader can download/read freely. As a result, the reader can save a lot of time and energy spent on choosing a desired book in the traditional bookstore.

Currently, a book website only provides the general content for the reader. No other themes can be arranged according to each reader's need. Furthermore, most of the book websites provides a readers' chat room from which readers can interact with each other and authors and sellers of the book can have a clear picture about the level of acceptance from the readers. However, the readers' chat room is usually full of long chunk of text messages which cost the authors and sellers of the book a lot of time to read before a review of the book can be obtained. In other words, the level of acceptance for the book will have to be determined from the chat room of the website or readers' letter. And as the web site need to be constructed with a database for storing the discussion messages, the cost for constructing a storage device of the website is inevitably increased.

Therefore, it is necessary to develop a book website which provides more attractive services to the users and better way of integrating the book review data, so that the readers, authors, and booksellers can all know the level of acceptance of the book.

### SUMMARY OF THE INVENTION

A primary objective of the present invention is to provide a method and a system of media management by which users can have access to books of different stories or contents according to users' requirements.

A further objective of the present invention is to provide a method and a system of media management by which a book website is not necessarily built with a huge or over-sized storage device for storing reviews or discussion data of books provided from the book website, thereby making the use of the storage device more economical and also providing access to the level of acceptance of the books for readers, authors and booksellers.

In accordance with the above and other objectives, the invention provides a method of media management which connects an output/input network interface to a media management system via a network system, enabling a user of the output/input network interface to browse a media content, the method comprising the following steps: (1) the user inputting a request of browsing the media from the output/input interface; (2) after the request from the output/input interface is received, the media management system searching from a menu database of the system for a media menu having a plurality of media with common story line and different tl=eme classifications before the media menu is sent to display on the output/input interface from which a choice is made by the user; (3) determining by the media management system if the user inputs the request of browsing different themes from the media menu, and the media management system searching from the media database stored with a plurality of media related data for a media file that matches the media name inputted by the user from the media menu before sending to the output/input interface for the user to browse from, if the request is not inputted; otherwise the media management system searching from the menu database for a theme classification menu and sending the theme classification menu to the output/input interface from which the user can input a desired theme, if the user inputs the request of browsing different themes; and (4) the media management system searching the media file that matches the media name and the theme classification inputted by the user from the theme classification menu before sending media file to the output/input interface for the user to browse from.

The invention also provides a media management system which connects an user located at an output/input interface to the media management system via a network system, enabling the user to download or browse a media resource provided by the media management system, the media management system comprising: a menu database for storing a plurality of the menu data; a receiving/transmitting process module for receiving the request from the output/input interface and searching the menu that corresponds to the request before sending the menu to the output/input interface; a media database for storing a plurality of media related data and a plurality of the theme classification related data, wherein the media related data comprising a media name and a media file that corresponds to the media name, and the theme classification related data comprising a media index code that corresponds to the media name, and a plurality of media theme files having a theme classification index and corresponding to the media index code; and a searching module for searching the media file that corresponds to the media name from the media database if the receiving/transmitting process module receives the media name to be read from the output/input interface, so as to enable the user located at the output/input interface to browse from; and after the receiving/transmitting process module receives the request for browsing different themes in the media, the searching module finds from the media database for the media theme file that corresponds to the media name and the theme classification, so as to enable the user located at the output/input interface to browse from.

Furthermore, as described in another embodiment, the media management system further comprising a computing process module, and both the plurality of the media related data and the theme classification related data saved in the media database further comprising a favorite level, which favorite level is computed by the computing process module according to number of people who browse the media together with a media review result received by the media management system from the output/input interface, so that the computed favorite level is saved in the media database.

According to the present invention, the media management system is built in a web server so as to enable the user of the output/input interface to freely download or browse the media through Internet.

### BRIEF DESCRIPTION OF THE DRAWINGS

The present invention can be more fully understood by reading the following detailed description of the preferred embodiments, with reference made to the accompanying drawings, wherein:
Fig. 1 is a block diagram showing a system framework of a media management system according to the invention;
Fig. 2 is a schematic table showing contents stored in a book database of the media management system shown in Fig. 1;
Fig. 3 is a schematic table showing contents stored in a story classification database of the media management system shown in Fig. 1;
Figs. 4(a) and 4(b) are flow charts showing procedural steps for executing a media management method in the use of the media management system according to the invention; and
Fig. 5 is a schematic table showing contents stored in a story ending classification database according to another embodiment of the story classification database shown in Fig. 1.

### DETAILED DESCRIPTION OF THE PREFERRED EMBODIMENTS

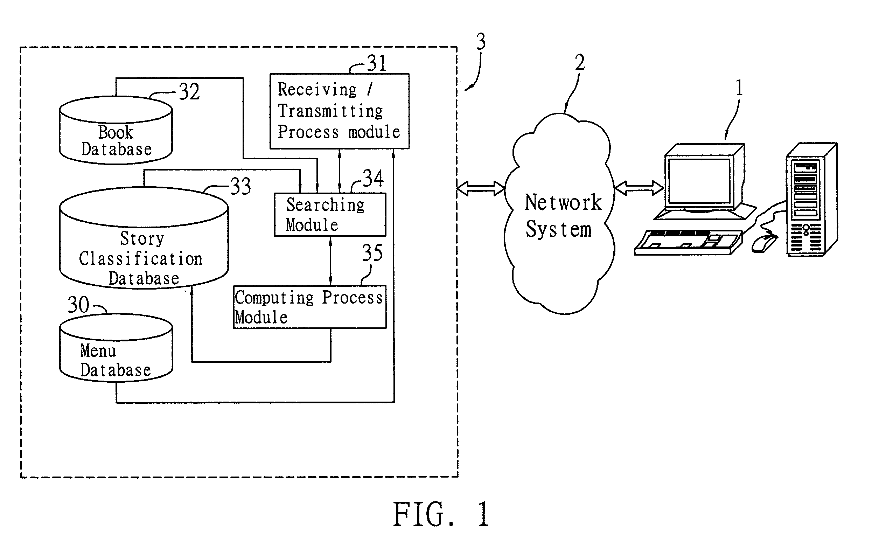

Fig. 1 is a block diagram illustrating a framework of a media management system according to the present invention. As shown in diagram, a media management system 3 is constructed in a web server (not shown), and the media management system 3 provides a media resource, such as a book content (as well as a movie content, but the following description will be made with the book content only as an example). As a result, a reader can use an output/input interface, such as a computer device 1 shown in the diagram to make a connection to the web server via Internet. Accordingly, the reader located at the computer device 1 may be able to read the book provided by the web server. The media management system 3 comprises a menu database 30, a receiving/transmitting process module 31, a book database 32, a story classification database 33, a search module 34, and a computing process module 35.

The receiving/transmitting process module 31 serves to receive the request and message data the reader inputs from the computer device 1, such that the receiving/transmitting process module 31 searches the corresponding process menu from the menu database 30 according to the request, and executes the corresponding procedures (listed below) according to the message data.

The menu database 30 saves a plurality of menus (not shown), creating interactions between the media management system 3 and the reader. The menus include a book menu, from which the reader can select a book to read, a story classification menu, from which the reader can select the desired story, a browse menu, from which the reader can make the reading, a review menu, from which the reader can input the review for the book after the book is read, and so on.

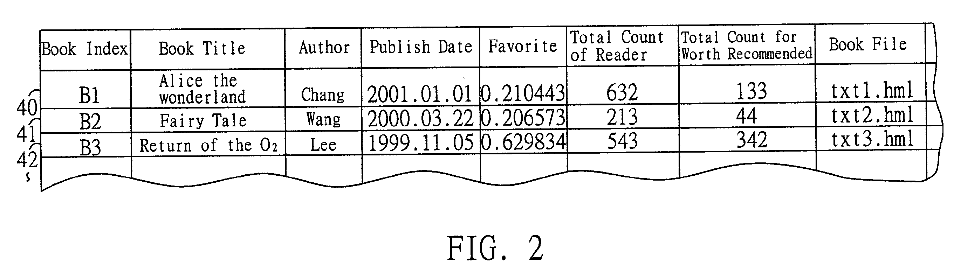

As shown in Fig. 2, the book database 32 has a plurality of contents saved within. The book database 32 saves a plurality of book index codes and other book related data (40, 41, 42, ...) corresponding to the index codes, which data comprising a title, author, publication date, and favorite level of the book, as well as total count of the readers, total counts of those who vote the book as worth recommended, and the book file.

The search module 34 then receives the title of the book input from the receiving/transmitting process module 31 and searches from the book database 32 for the book file that matches the title of the book after the title of the book is received. Next, the receiving/transmitting process module 31 combines the book file located and the browse menu found by the menu database 30 before transmitting the book file and the browse menu to the computer device 1, from which the reader can read.

The computing process module 35 serves to compute the reader's favorite level for the book. And while the search module 34 receives the reading request input from the receiving/transmitting process module 31, the search module 34 searches in the book database 32 for total count of the readers that corresponds to the title of the book, and 1 is added to the total count of the readers by the computing process module 35. If the search module 34 receives a worth recommended request input from the receiving/transmitting process module 31, the search module 34 searches in the book database 32 for total counts of those who vote the book as worth recommended that corresponds to the title of the book, and 1 is added to the total counts for those who vote the book as worth recommended by the computing process module 35, while the computing process module 35 computes the favorite level by dividing the total counts for those who vote the book by the total count of the readers. Also, the computing process module 35 saves the computing result in the book database 32.

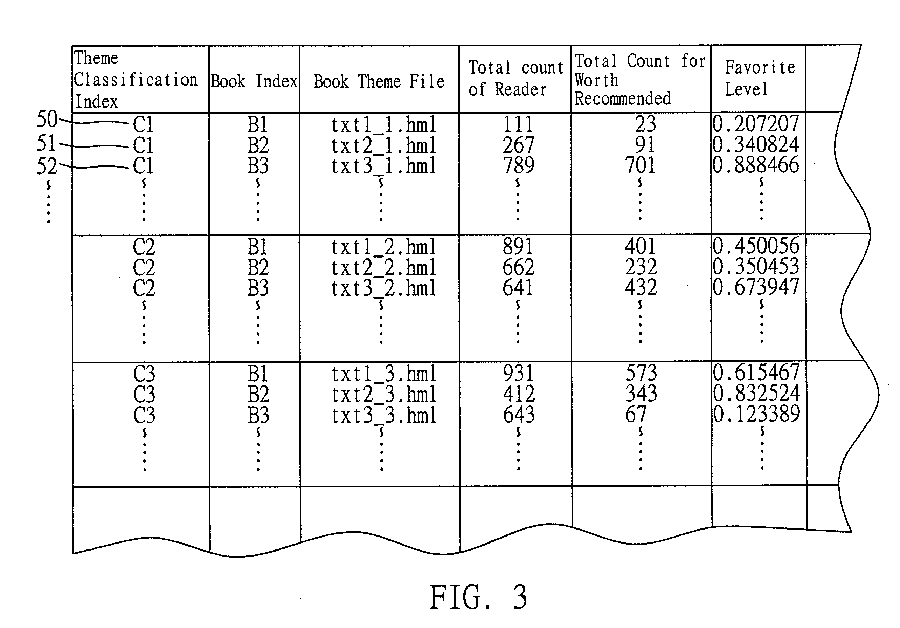

As shown in Fig. 3, the story classification database 33 has a plurality of contents saved within. The book database 33 saves a plurality of story classification index, a book index, and other story classification related data (50, 51, 52, ...) corresponding to the story classification index and the book index, which data comprising a book file, a total count of the readers, a total count of those who vote the book as worth recommended, and a favorite level. In this case, each of the book index (B1, B2, B3, ...) in the story classification related data (50, 51, 52, ...) corresponds to the index (B1, B2, B3, ...) in the book database 32. This shows that the all the book files (txt1.hml, txt2.hml, txt3.hml, ...) saved in the book database 32 contain ordinary story lines. So if the reader is bored of the usual story line, story content with different story settings may be selected. For instance, each story classification related data (50, 51, 52, ...) in the story classification database 33 contains the story classification index (C1, C2, C3, ...), wherein the index C1 represents sentimental, the index C2 represents hilarious, the index C3 represents action. Therefore, besides the usual story lines, the books may also be classified according to different stories provided as sentimental, hilarious, action, and so on, so as to satisfy different readers' need.

And similar to the book related data (40, 41, 42, ...) in the book database 32, the story classification related data (50, 51, 52, ...) in the story classification database 33 comprises the total count of the readers, the total count of those who vote the book as worth recommended, and the favorite level. Thus, the media management system 3 may rank the reader's level of acceptance according to the favorite level of the story classification related data (50, 51, 52, ...).

The computer device 1 provides a browser, such as Microsoft Internet Explorer, Netscape Navigator, or other network browsing programs, that allows the reader to input the above-mentioned requests, and displays all menus, book files, story classification files, and other message data sent by the media management system 3.

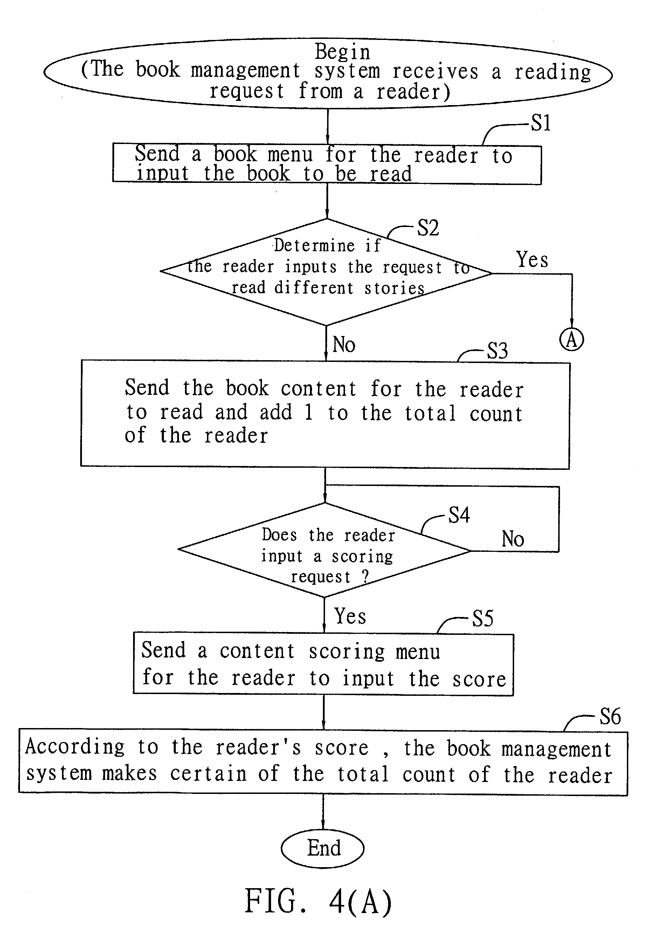

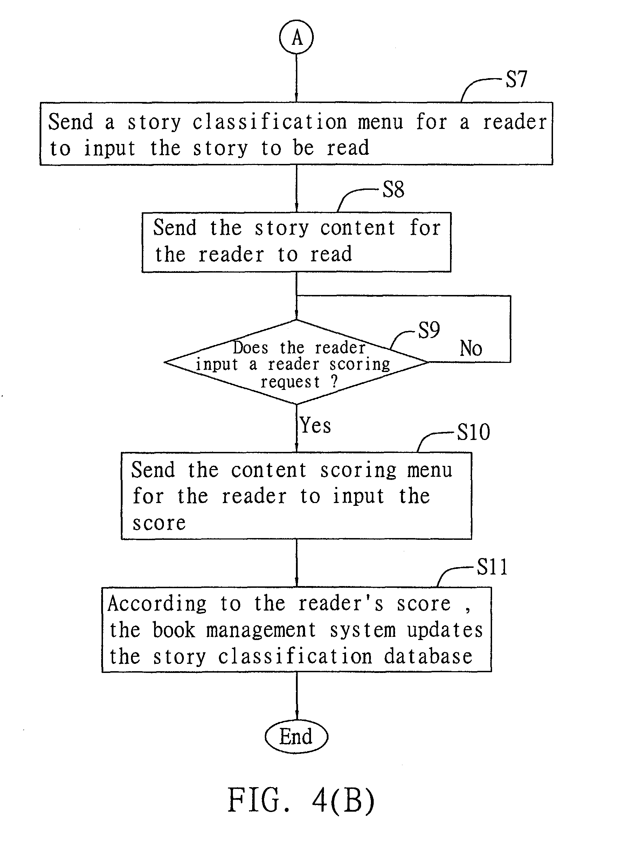

Next, referring to Figs. 4(a) and 4(b) which illustrate steps of executing method of media management according to the media management system 3 of the preset invention. The following description is made with reference to both Fig. 1 and Figs. 4(a) and 4(b).

As the media management system 3 receives the reading request sent by the reader, step S1 is executed. After the receiving/transmitting process module 31 receives the reading request from the computer device 1, the menu database 30 is searched for the corresponding book menu (not shown) according to the reading request, so as to provide the reader with the desired book. The book menu provides books with common story and different story classifications, so that the reader can make a selection from the book menu. Then, step S2 is executed.

In step S2, the receiving/transmitting process module 31 determines whether the reader inputs the request to read different stories on the book menu. And if the reader does, step S7 shown in Fig. 4(b) is executed. Otherwise, step S3 is executed instead.

In step S3, after the reader selects the desired book from the book menu displayed on the browser of the computer device 1, the receiving/transmitting process module 31 sends a searching request, commanding the search module 34 to find from the plurality of the book related data (40, 41, 42, ...) saved in the book database 32 for the corresponding book file and the total count of the reader according to the title of the book. The receiving/transmitting process module 31 then sends the book file to the computer device 1, from which the file is displayed for the reader to read. And the computing process module 35 adds 1 to the total count of the readers corresponding to the book file, so as to update the previous data of total count of the readers. Then, step S4 is executed.

In step S5, after the receiving/transmitting process module 31 receives a reviewing request from the computer device 1, a corresponding review menu (not shown) is searched from the menu database 30 according to the reviewing request, so that the reader can enter the review. The review menu comprises a worth recommended option, a recommendation aborted option, and a no opinion option for the reader to choose from when the review is made. Then, step S6 is executed.

In step S6, if the review message received by the receiving/transmitting process module 31 is the no opinion option, the computing process module is commanded to subtract 1 from the total count of the readers in the book related data. And if the review message received by the receiving/transmitting process module 31 is the worth recommended option, the computing process module is commanded to add 1 to the total count of those who vote for worth recommended in the book related data. After that, the total count of the readers and the total count of those who vote for worth recommended are saved in the book related data, and the favorite level is computed according to both the total count of the readers and the total count of those who vote for worth recommended before saving the favorite level in the book related data.

Next, referring to Fig. 4(B), which continues from the node A illustrated in Fig. 4(A) above as the step S2 is executed. First of all, step S7 is executed. When the reader enters the different stories to be read from the book in the book menu displayed on the browser of the computer device 1, the receiving/transmitting process module 31 searches from the menu database 30 for the corresponding story classification menu (not shown) according to the reading request, so as to provide the reader with the desired story. The story classification menu comprises different classifications, such as sentimental, hilarious, action, and so on. Then, step S8 is executed.

In step S8, after the reader enters the story to be read from the book in the story classification menu displayed on the browser of the computer device 1 (i.e. the title of the book is entered in the step S1 before entering the story classification in the step S7 above), the receiving/transmitting process module 31 sends a searching request for commanding the search module 34 to find from the story classification related data (50, 51, 52) saved in the story classification database 33 for the corresponding story file and the total count of the reader according to the book and the story classification index. The story file is then sent by the receiving/transmitting process module 31 to display on the computer device 1, from which the reader can read the story file. And the computing process module 35 adds 1 to the total count of the readers corresponding to the story file, while updating the original data of the total count of the readers. Then, step S9 is executed.

In step S9, the receiving/transmitting process module 31 determines whether the reader enters a reviewing request. If the reader does, step 10 is executed. Otherwise, the process returns to step S9.

In step S 10, after the receiving/transmitting process module 31 receives the reviewing request from the computer device 1, the corresponding review menu (not shown) is found from the menu database 30 according to the reviewing request, so that the reader may enter the review in the review menu. The review menu comprises a worth recommended option, a recommendation aborted option, and a no opinion option for the reader to make the review. Then, step S11 is executed.

In step S11, if the review message received by the receiving/transmitting process module 31 is the no opinion option, the computing process module 35 is commanded to subtract 1 from the total count of the readers in the story classification related data. And if the review message received by the receiving/transmitting process module 31 is the worth recommended option, the computing process module 35 is commanded to add 1 to the total count of those who vote for worth recommended in the story classification related data. After that, the total count of the readers and the total count of those who vote for worth recommended are saved in the story classification related data, and the favorite level is computed according to both the total count of the readers and the total count of those who vote for worth recommended before saving the favorite level in the story classification related data.

Accordingly, the reader can read both the book and different stories of the book from a web site. And besides that, the seller, author, and reader of the book may also acquire reader' s level of acceptance towards the book and different stories of the book instantly.

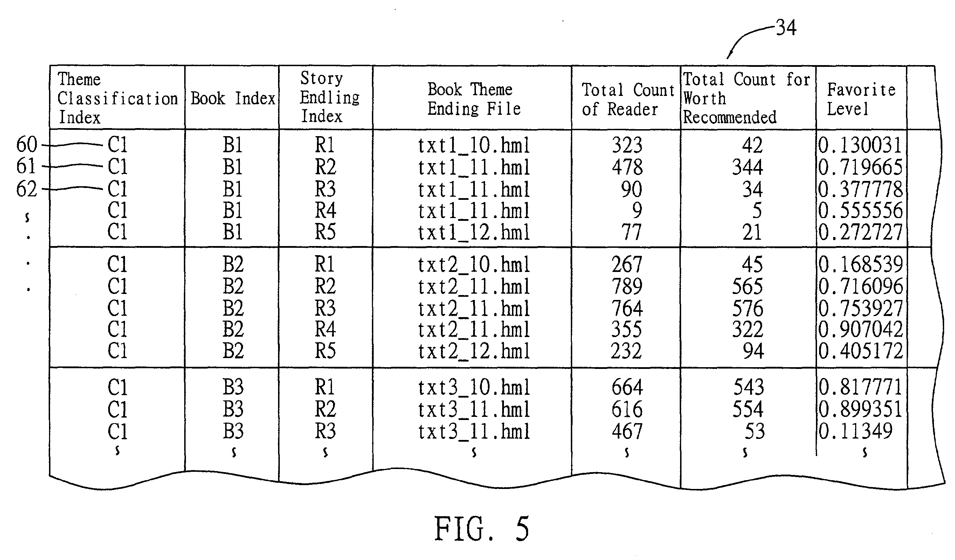

Fig. 5 is another schematic table illustrating the content saved in a story ending classification database according to another embodiment of the story classification database shown in Fig. 1. As shown in the diagram, the story ending classification database 36 described in this embodiment is derived according the content saved in the story classification database 33, which story ending classification database 36 comprising a plurality of story ending classification related data (60, 61, 62, ...). That is, when the reader is not happy with a particular story ending of the book after reading, a request for changing the story ending is sent to the receiving/transmitting process module 31, so that the receiving/transmitting process module 31 can command the search module to search from the story ending classification database 36 for the next story ending not yet read by the reader. In other words, the search module 34 searches different story endings corresponding respectively to the story classification index and the book index, and sends in sequence to display on the computer device 1 of the reader until the reader is satisfied.

The examples mentioned above are meant to describe the preferred embodiment of the present invention, but not to limit the scope of the invention. For instance, the book database 32 and story classification database 33 in the media management system 3 as described in Fig. 1 above may also be integrated in the same database structure. And the story ending classification database 36 as described in Fig. 5 above may also be integrated with the book database 32 and story classification database 33 in the same database structure. Furthermore, besides establishing a connection between the computer device 1 and media management system 3 via Internet described in the embodiment above, a portable electronic device such as PDA or mobile phone (not shown) may also connect via a wireless transmission system, such as Global Position System (GPS) to the media management system 3.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A method of media management which connects an output/input interface to a media management system via a network system, to allow a user located at the output/input network interface to browse contents of desirable media, the method comprising the steps of:
(1) inputting a media browsing request via the user at the output/input interface;
(2) upon receiving the media browsing request from the output/input interface, searching via the media management system from a menu database thereof for a media menu having a plurality of media with common and different story classifications and sending the media menu to the output/input interface for display to allow the user to select;
(3) determining via the media management system if the user inputs a request of browsing different stories to the media menu; if no, searching via the media management system from a media database thereof stored with a plurality of media related data for a media file corresponding to a media name inputted from the user to the media menu and sending the media file to the output/input interface for display to be accessible for the user; if yes, searching via the media management system from the menu database for a story classification menu corresponding to the request of browsing different stories from the user and sending the story classification menu to the output/input interface for display to be accessible for the user; and
(4) searching via the media management system from the media database stored with a plurality of story classification related data for a media story file corresponding to a media name and a story classification inputted from the user to the story classification menu and sending the media story file to the output/input interface for display to be accessible for the user.

2. The method of media management of claim 1, wherein the media related data and story classification related data stored in the media database of the media management system are each provided with a favorite level, whereby when the media management system receives media review results from the output/input interface, it computes the favorite level according to a number of people who browse corresponding media or stories and stores the computed favorite level into corresponding media related data or story classification related data.

3. The method of media management of claim 2, wherein the media related data stored in the media database of the media management system are provided with a total number of browser people, a total number of media worth recommended and the favorite level, whereby in the step (3), when the media management system sends the media file to the output/input interface for display, a total number of browser people corresponding to the media file is added by 1, and then, if the user inputs a reviewing request from the output/input interface to the media management system, the media management system finds from the menu database for a content reviewing menu comprising a "worth recommended" option, a "not recommended" option and a "no comment" option and sends the content reviewing menu to the output/input interface for the user to input a review result; if the review result from the user is "no comment", the total number of browser people is subtracted by 1; if the review result from by the user is "worth recommended", a total number of media worth recommended corresponding to the media file is added by 1; then, the computed total number of browser people or total number of media worth recommended is stored in corresponding media related data, and a corresponding favorite level is calculated according to a ratio of the total number of browser people and the total number of media worth recommended and stored in the media related data.

4. The method of media management of claim 2, wherein the story classification related data stored in the media database of the media management system are provided with a total number of browser people, a total number of media worth recommended and the favorite level, whereby in the step (4), when the media management system sends the media story file to the output/input interface for display, a total number of browser people corresponding to the media story file is added by 1, and then if the user inputs a reviewing request from the output/input interface to the media management system, the media management system finds from the menu database for a content reviewing menu comprising a "worth recommended" option, a "not recommended" option, and a "no comment" option and sends the content reviewing menu to the output/input interface for the user to input a review result; if the review result from the user is "no comment", the total number of browser people is subtracted by 1; if the review result from the user is "worth recommended", a total number of media worth recommended corresponding to the media story file is added by 1; then the computed total number of browser people or total number of media worth recommended is stored in corresponding story classification related data, and a corresponding favorite level is calculated according to a ratio of the total number of browser people and the total number of media worth recommended and stored in the story classification related data.

5. The method of media management of claim 1, wherein the media database of the media management system further stores a plurality of story ending classification related data having a plurality of media story ending files that correspond to media names and story classifications of the story classification related data, such that users who are not satisfied with story endings of particular media are able to browse other story endings in sequence until finding a satisfactory story ending.

6. The method of media management of claim 1, wherein the output/input interface is a computer device or a portable electronic device.

7. The method of media management of claim 6, wherein the portable electronic device is a personal digital assistant (PDA).

8. The method of media management of claim 1, wherein the network system is Internet.

9. The method of media management of claim 6, wherein the device comprises a browser for allowing the user to input requests thereto and displaying the menu, media file and media story file from the media management system.

10. The method of media management of claim 1, wherein the media include book or movie contents.

11. The method of media management of claim 1, wherein the media management system is constructed in a web server.

12. A media management system for allowing a user to download or browse media resources provided by the media management system with a network connection being established between the user located at an output/input interface and the media management system via a network system, the media management system comprising:
a menu database for storing a plurality of menu data;
a receiving/transmitting process module for receiving a request from the output/input interface and for searching a menu from the menu database corresponding to the request and sending the menu to the output/input interface;
a media database for storing a plurality of media related data and a plurality of story classification related data, wherein the media related data comprise media names and media files corresponding to the media names, and the story classification related data comprise media index codes corresponding to the media names and media story files having story classification indexes and corresponding to the media index codes; and
a searching module for searching a media file from the media database corresponding to a media name inputted from the output/input interface and received by the receiving/transmitting process module, to allow the user at the output/input interface to access the media file; and when the receiving/transmitting process module receives a request of browsing different stories from the output/input interface, having the searching module find a media story file from the media database corresponding to a media name and a story classification in the request, to allow the user at the output/input interface to access the media story file.

13. The media management system of claim 12, wherein the media management system further comprises a computing process module, and the media related data and story classification related data stored in the media database are each provided with a favorite level, so as to allow the computing process module to compute a favorite level according to a number of people who browse corresponding media and media review results that are inputted from the output/input interface and received by the receiving/transmitting process module, the computed favorite level being stored in the media database.

14. The media management system of claim 12, wherein the media database further stores a plurality of story ending classification related data having a plurality of media story ending files that correspond to media names and story classifications of the story classification related data, such that users who are not satisfied with story endings of particular media are able to browse other story endings in sequence until finding a satisfactory story ending.

15. The media management system of claim 12, wherein the output/input interface is a computer device or a portable electronic device.

16. The media management system of claim 15, wherein the portable electronic device is a personal digital assistant (PDA).

17. The media management system of claim 12, wherein the network system is Internet.

18. The media management system of claim 15, wherein the device comprises a browser for allowing the user to input requests thereto and displaying the menu, media file and media story file from the media management system.

19. The media management system of claim 12, wherein the media include book or movie contents.

20. The media management system of claim 12, wherein the media management system is constructed in a web server.
